# EUROPEAN PATENT APPLICATION

(11) **EP 0 825 582 A1**
(43) Date of publication of application: **25.02.1998**
(21) Application number: 97305595.7
(22) Date of filing: 25.07.1997
(51) Int. Cl.: G09B 23/00, G09B 23/28, G09B 23/30

(54) **Simulation system**

(30) Priority: 26.07.1996 GB 9615802
(71) Applicant: Harris, Peter Lyon, Liverpool L18 3JR, Merseyside (GB); How, Thien Voon, Liverpool L23 4UE, Merseyside (GB); Chong, Chuh-Khiun, Liverpool L7 7AD, Merseyside (GB)
(72) Inventor: Harris, Peter Lyon, Liverpool L18 3JR, Merseyside (GB); How, Thien Voon, Liverpool L23 4UE, Merseyside (GB); Chong, Chuh-Khiun, Liverpool L7 7AD, Merseyside (GB)
(74) Representative: Lyons, Andrew John

(57) **Abstract**

A device suitable for practising endovascular repair surgery involving insertion of a graft, comprises a model (10) of a repair site, the model having an inlet (16) and one or more outlets (20, 22), means (26) for transporting fluid through the model via the inlet and the outlet and means for inserting the graft.

## Description

This invention concerns a simulation system, especially for training in endovascular repair surgery.

In approximately 10 per cent of elderly men, and rather less commonly in elderly women, degenerative arterial disease weakens the wall of the abdominal aorta, which results in a fusiform expansion or bulge. This condition is known as abdominal aortic aneurysm. Initially small in size, the aortic aneurysm progressively expands with further weakening of the wall. This condition accounts for almost 10,000 deaths per year in the United Kingdom. The immediate cause of death is rupture of the aneurysm and catastrophic intra-abdominal haemorrhage. Of those patients who reach the hospital in time, between 40 and 70 per cent can be saved by emergency surgery, but overall less than 20 per cent of those afflicted survive rupture of their aneurysm.

Both the rate of growth and the risk of rupture increase with the size of the aneurysm. Aneurysms with a transverse or antero-posterior diameter of about 5 cm have an annual risk of rupture of between 6 and 10 per cent. Above this size, the risk increases sharply. It has, therefore, become normal practice to treat all patients with aneurysms of diameter 5 cm or greater by elective surgery, provided that they have no other serious illnesses and are fit for operation.

The mortality rate from ruptured aneurysms remains high because most of these lesions are asymptomatic and therefore go undetected until they rupture. For this reason there has been increasing interest in recent years in community screening programmes. Aneurysms can be detected with a high degree of accuracy, and their size estimated by abdominal ultrasound imaging. Aneurysm is predominantly a disease of the elderly male and screening of this "at risk" population (aged 65 to 75 years) detects abnormally dilated abdominal aortas in 8 to 10 per cent of cases. About 3 per cent have aneurysms of sufficient size to warrant elective surgical treatment by the usual criteria, and in the remainder the aneurysms are small, i.e., between 2.9 and 4 cm (Birmingham Community Aneurysm Screening Programme).

Currently, surgery represents the only effective treatment for aortic aneurysms. The operation is a major one, involving a hospital stay of 10 to 14 days on average, and is associated with a mortality rate of 5 to 10 per cent. For the elderly atherosclerotic patients involved, it is an extremely disruptive and hazardous undertaking. It is a procedure which is justified for those with large aneurysms, even when they are asymptomatic, but open surgery for small aneurysms is not considered to be appropriate. It is current practice to keep the majority of such lesions under observation with repeated ultrasound scanning, and operation is only offered to those whose aneurysms become symptomatic, attain a diameter of at least 5 cm or appear to be expanding rapidly. Although this scheme of management is preferable to indiscriminate surgery, it is unsatisfactory because the lesion remains unresolved, and there is a small but definite risk of rupture even with the smallest aneurysms giving rise to anxiety to the patient.

Endovascular grafting represents an alternative approach for the management of aneurysms which would have very considerable advantages over current operative and non-operative methods. The principle is that an endovascular prosthesis of appropriate design, when accurately positioned within the lumen, would form a strong internal lining to resist further expansion and thereby stabilise the aneurysm and eliminate the risk of rupture. As with present day endovascular stents which are used for occlusive disease, this device must be capable of compression to a small diameter so that it may be introduced at a convenient remote site (the common femoral artery) either percutaneously or by minor surgery under local anaesthesia. The graft is guided on a catheter carrying system under radiological or ultrasonic control for expansion and fixation within the aneurysm. The technique is minimally invasive and has associated with it a very low risk of complication. It is, therefore, applicable to most patients with aneurysms and even to those who are very elderly and infirm provided that the endovascular access is not obstructed by occlusive arterial disease.

The gross anatomical distortions associated with large aneurysms may render endovascular grafting less applicable and open surgery is likely to remain the best option for lesions of this type. However, the early prophylactic endovascular grafting of aneurysms, if applied on a wide scale, would in theory reduce the requirements for reconstructive aortic surgery, very considerably, with major costs benefits for the provision of health care.

The surgical procedure has to be carried with intermittent X-ray scanning in order to track and correctly position the stent graft. Continuous X-ray scanning is not a viable option, so that the graft is not in continuous view for the surgeon. As with any surgical procedure a surgeon can only become skilled with practice. The procedure may be practised on animals but because of cost and the difficulty of direct comparison with human subjects is not really viable.

A more realistic approach would be to provide a simulation system enabling repetition of the surgical procedure for a surgeon to acquire and improve the necessary skills.

An object of this invention is to provide a simulation system suitable for practising endovascular repair surgery.

According to this invention there is provided a simulation system suitable for practising endovascular repair surgery involving insertion of a graft, comprising:
a model of a repair site, the model having an inlet and an outlet;
means for transporting fluid through the model via the inlet and outlet;
means for inserting the graft; and preferably
means for monitoring said insertion.

The model used in the simulation system of the invention may be formed of transparent plastics material and may conveniently be formed as a block in two parts clamped or otherwise fixed together preferably in water-tight condition. Acrylic plastics material has been found to be particularly suitable for this purpose as it can be milled or moulded to shape.

Alternatively, the model may be formed of material that may more closely mimic natural compliance of arterial walls. Preferably the model is formed of a clear elastomeric material, such as, for example silicone rubber. Such models can be fabricated by an investment casting technique. The model, especially a thin-walled model, may further be embedded in a block of transparent compliant, especially gelatinous, material. Preferably the compliant material is one whose consistency can be varied to control the amount of flexibility of the model. Suitable compliant materials, i.e. that have desirable physical, mechanical and optical properties, are silicone gels.

The surface of the model is preferably coated with a low friction material to reduce the surface friction of the model. An example of a suitable coating material is hydrogel, being chemically bonded to the surface of the elastomeric model.

The shaping of the model may be computer controlled based on dimensions obtained from radiological examination of typical patient subjects, such as from angiograms and CT scans.

For procedures for repairing aortic aneurysms, the model is of an aorta with a bulge representing the aneurysm and preferably has a suprarenal inlet and outlets representing renal arteries, the common femoral and internal iliac arteries.

The inlet is preferably connected to a fluid reservoir via pump means for providing pulsed fluid flow through the model. The outlets are preferably connected to the reservoir via valves or flowmeters, whereby fluid flow rate through the model can be controlled to correspond to typical flow patterns through a live patient. The outlets preferably return fluid to the reservoir via variable area flowmeters.

The outlets may alternatively return fluid to the reservoir via a secondary reservoir preferably including an overflow system. A bubble trap may also be included in the fluid flow system.

The fluid used in the system of the invention preferably has similar flow properties to those of blood. Aqueous solutions of glycerol have been found to be suitable for that purpose.

Endovascular stent graft devices are generally constructed of shape memory material such as Ni-Ti alloy, which is temperature dependent. To insert such a device, it is cooled, usually in ice cold saline, within its applicator prior to insertion, whereby it becomes soft and compliant. When the device comes into contact with blood at normal body temperature, it resumes its expanded state thus applying pressure to the aortic wall, which is necessary for its secure fixation. Therefore, in the simulation system according to the invention, it is preferable to provide means for maintaining the fluid being transported through the model at a temperature equivalent to normal body temperature i.e. preferably in the range of 37 to 38°. Thus, the system of the invention preferably comprises a heating means for the fluid. which may be conveniently associated with the reservoir and which may be thermostatically controlled. An electrical heating coil in the reservoir may be suitable as the heating means.

The renal outlets are above the aneurysm bulge and the other outlets are below the bulge. The renal outlets preferably combine to a single fluid return line as do the internal iliac artery outlets. At least one of the outlet lines, preferably a femoral outlet line, includes a connection through which the graft may be introduced to the model. Preferably the connection is a replaceably elastomeric tube connector which allows haemostatic access of guidewires, catheters etc. The outlets preferably include representation of both the left and right femoral arteries so that insertion of the graft through either can be practised.

The means for monitoring insertion of the graft preferably comprises a video camera. The camera is preferably arranged to be movable about the model in at least one arcuate plane and possibly also to be movable along a longitudinal axis of the aneurysm. The video camera and the model are preferably enclosed in an opaque chamber or the like with its own internal lighting, whereby the model cannot be viewed directly but rather via a display monitor connected to the camera.

The display monitor is preferably connected to the camera via a computer. The computer is ideally arranged to be operated during a practice procedure by means of a footswitch. Whilst the video camera may be arranged for continuous operation during a practice procedure providing a recording say on a remote video recorder, the computer is preferably programmed to provide fixed frame images corresponding to aortograms taken during a live operation to monitor progress of the graft insertion. Thus, a visible liquid, such as a dye or ink, may be injected into the model periodically and one or more video frames taken and displayed on the monitor for review.

When the graft has been inserted and displayed in the model, visual inspection of the model is possible. The stent graft may then be removed and the procedure practised again. Video recording facilities provide an opportunity to review the complete procedure afterwards.

This invention will now be further described, by way of example only, with reference to the accompanying drawings, in which:
Figure 1 shows schematically a simulation system for practising endovascular repair surgery;
Figure 2 shows a video camera arrangement for monitoring the system of Figure 1;
Figure 3 is a schematic diagram of the video camera system; and
Figure 4 shows schematically another simulation system for practising endovascular repair surgery.

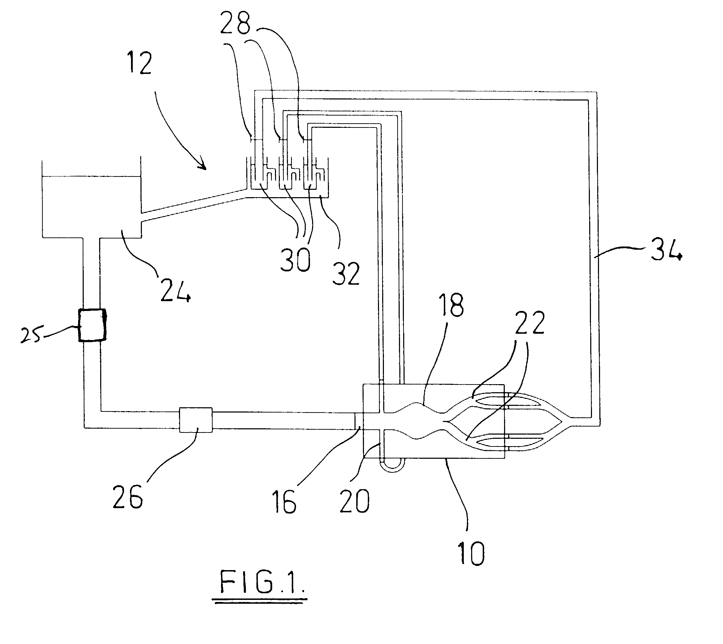

Referring to Figures 1 to 3 of the accompanying drawings, a simulation system for practising endovascular repair surgery basically comprises a model 10, a fluid flow system 12 for transporting fluid through the model to simulate blood flow and a video camera system 14 for monitoring the repair process.

Turning specifically to Figure 1 of the accompanying drawings, the model 10 is of an aorta with an aortic aneurysm and was made to scale from clear plastics material, such as acrylic plastics material. The model was produced from two blocks of plastics material by surface milling. After polishing the two blocks were clamped together to form a transparent and water tight aortic aneurysm model. A model formed of clear silastic material embedded in a block of glycerine may be used instead of the acrylic model. The model was based on a typical human aorta and has an inlet 16, a bulge 18 representing the aneurysm and various outlets representing the renal arteries 20, the common femoral and internal iliac arteries 22.

The aortic inlet 16 is connected to a main fluid reservoir 24 via a servo-controlled piston pump 26 in order to produce a pulsatile flow of liquid, typically an aqueus solution of glycerol, to represent blood flow through the aorta. The fluid passes through a heater and thermostat 25 in order to maintain its temperature at around 37 to 38° i.e. normal body temperature. Each of the outlet arteries is connected to the fluid reservoir 24 to return the liquid. Return of liquid is via control valves 28 and an overflow system 30 to a secondary fluid reservoir 32 connected to the main fluid reservoir 24. By means of the control valves 28, the distribution flow of the fluid through the renal, femoral and iliac arteries can be adjusted to correspond with typical blood flow through an aorta of a patient. A bubble trap (not shown) may be included in the fluid flow system.

The outside connections are made using plastics tubing. The connection 34 represents the left or right femoral artery entry to either is provided by a self-sealing Y-tube connector (not shown) for insertion of the stent graft into the aortic aneurysm.

The model 10 is enclosed in an opaque chamber so that it cannot be viewed directly in order to mimic operating conditions. The model is, however, back-lit from light box 40 and the video camera 14 provided to monitor the operating procedure. The video camera 14 is supported on a C-arm 42 for movement along an arc, whereby images of the anterior-posterior and lateral planes may be obtained. The camera is also arranged to move towards and away from the model.

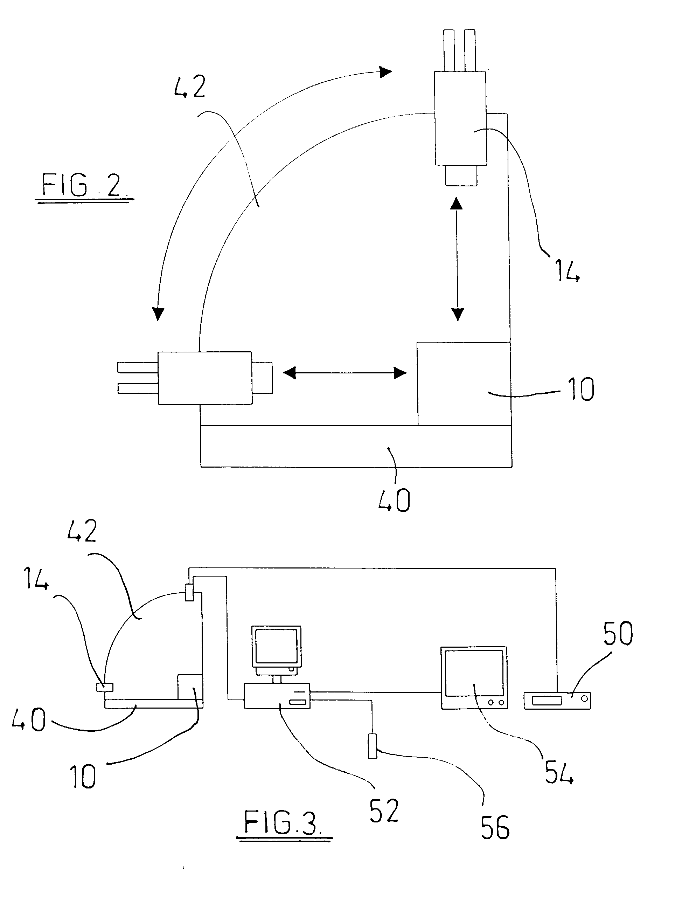

The video camera 14 (see Figure 3) is connected in parallel to a video recorder 50, and to a computer 52. The computer 52 is in turn connected to a display monitor 54 and to a footswitch 56.

In order to provide an anatomical reference point for the model in the images displayed on the monitor 54, an abdominal X-ray film is placed between the light box and the model to show bony landmarks.

The footswitch 56 is used to operate the computer which controls operation of the video camera. The computer is programmed so that a continuous view is not provided on the monitor 54 but rather a frozen image is produced on each operation of the footswitch. That is done to reproduce operating conditions in which only intermittent X-ray pictures are obtained and frozen on a display screen whilst the procedure is in progress. Of course, the video camera will operate continuously and provide a complete video record of a practice procedure obtained for later review.

The practice procedure will generally be carried out in the following manner. As an aortogram is normally performed during an actual operation to locate the renal arteries accurately, this is achieved in the simulation by injecting black ink into the model via a catheter while initiating the acquisition of a series of video frames upon activation of the footswitch. The frames obtained are reviewed on the monitor and the most appropriate one selected for display. Normal real-time video display may be resumed upon activation of the footswitch.

The stent graft which is made of shape memory metal, such as Nytinol, is firstly cooled to facilitate insertion. The graft is then advanced and delivered to the aneurysm site of the model via the left or right femoral artery with the help of the aortograms as in a real procedure. Upon reaching the target site, the stent graft is deployed. Because the fluid in the system is maintained at normal body temperature the graft device on contact therewith expands to apply pressure on the aortic wall of the model. When the whole procedure is finished, the exact location of the stent graft can be checked by direct inspection of the model and the stent graft can be retrieved from the target site through the suprarenal aorta after each practice.

Whilst the practice operation is carried out with only frozen periodical aortograms displayed on the monitor as in a real procedure, the entire practice procedure will have been recorded for later review.

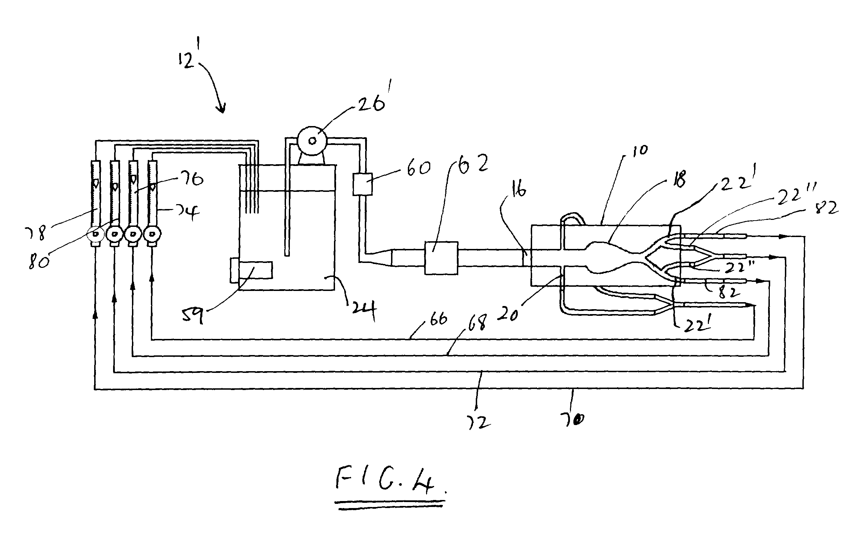

Turning to Figure 4 of the accompanying drawings, a simulation system for practising endovascular repair surgery is shown which is in many respects very similar to the system of Figures 1 to 3 and indeed, uses the same video camera arrangement as shown in Figures 2 or 3 of the drawings. For the sake of simplicity only the main differences between the respective systems will now be described and like parts in the system of Figure 4 to those of Figure 1 have been given the same reference numbers.

The fluid flow system 12' of Figure 4 has a number of differences. Firstly, the reservoir 24 includes a thermostatically controlled eletrical coil heater 59 for maintaining the temperature of the fluid at normal blood temperature i.e. at about 37 to 38°C. The pump 26' is a gear pump instead of a piston pump. The line to the aorta inlet includes a pressure sensor 60 and a flowmeter 62. The pressure sensor is to monitor pressure in the flow system such that if the pressure reaches a certain predetermined threshold means are provided to activate a circuit which switches off the pump 26'. The flowmeter is for monitoring and controlling normal fluid operating flow.

The renal artery outlets 20 instead of returning to the reservoir as separate lines are combined to form a single return line 66. The femoral artery outlets 22' are continued as separate return lines 68, 70, whereas the iliac artery outlets 22" are combined to form a single return line 72. Each return line 66, 68, 70 and 72 includes its own flowmeter 74, 76, 78 and 80 respectively for monitoring and controlling fluid flow.

The femoral artery outlets 22' includes replaceable elastomeric tube sections 82 and it is through there that haemostatic access of guidewires, catheters etc is carried out.

In all other respects, the system of Figure 4 operates and is used generally in the same way as the system of Figures 1 to 3, including the monitoring and recording of practice procedure.

Thus, the above described systems allow repeated practice of deployment of a stent-graft in an aortic aneurysm with full recording of the procedure for review to aid the learning process.

It will be appreciated that whilst the above simulation systems have been described with specific reference to aortic aneurysms the systems may also be suitable for other like procedures where a model can be provided of a typical operation site.

## Claims

1. A simulation system suitable for practising endovascular repair surgery involving insertion of a graft, comprising:
a model of a repair site, the model having an inlet and one or more outlets;
means for transporting fluid through the model via the inlet and the outlet; and means for inserting the graft.

2. A system as claimed in claim 1 further comprising means for monitoring insertion of the graft.

3. A system as claimed in claim 1 or 2, wherein the model is formed of transparent material.

4. A system as claimed in claim 1, 2 or 3, wherein the model comprises a block having two parts clamped together in water-tight condition.

5. A system as claimed in claim 3 or 4, wherein the model is of acrylic plastics material.

6. A system as claimed in claim 1, 2 or 3, wherein the model is formed of clear elastomeric material.

7. A system as claimed in claim 6, wherein the elastomeric material is of silicone.

8. A system as claimed in claim 6 or 7, wherein the model is embedded in transparent compliant material.

9. A system as claimed in claim 8, wherein the compliant material is one whose consistency is variable to control the flexibility of the model.

10. A system as claimed in claim 8 or 9, wherein the compliant material is gelatinous.

11. A system as claimed in claim 10, wherein the gelatinous material is silicone gel.

12. A system as claimed in any one of the preceding claims, wherein the model is provided on its surface with a low friction coating.

13. A system as claimed in claim 12, wherein the low friction coating is hydrogel.

14. A system as claimed in any one of claims 1 to 13, wherein the model is of an aortic aneurysm.

15. A system as claimed in claim 13, wherein the model has a suprarenal inlet and outlets representing renal arteries, a common femoral artery and internal iliac arteries.

16. A system as claimed in any one of claims 1 to 15, wherein the inlet is connected to a fluid reservoir via a pump for providing pulsatile fluid flow through the model.

17. A system as claimed in claim 16, wherein outlets are connected to the reservoir via valves.

18. A system as claimed in claim 16, wherein outlets are connected to the reservoir via flowmeters.

19. A system as claimed in any one of claims 1 to 18, comprising means for maintaining the fluid at a desired temperature.

20. A system as claimed in any one of claims 1 to 19, wherein the fluid is an aqueous solution of glycerol.

21. A system as claimed in any one of claims 1 to 20, wherein an outlet line includes a connection through which the graft is introduced into the model.

22. A system as claimed in any one of claims 1 to 21, wherein the means for monitoring insertion of the graft comprises a video camera.

23. A system as claimed in claim 22, wherein the video camera is arranged to be movable about the model in at least one arcuate plane.

24. A system as claimed in claim 22 or 23, wherein the video camera is movable along a longitudinal axis of the model.

25. A system as claimed in claim 22, 23 or 24, wherein the video camera and the model are enclosed in an opaque chamber with its own internal lighting and the video camera is connected to a remote monitor for viewing progress of insertion of the graft.

26. A system as claimed in claim 25, wherein the monitor is connected to the video camera via a computer.

27. A system as claimed in claim 26, wherein the computer is programmed to provide fixed frame images.

28. A system as claimed in any one of claims 22 to 27, further comprising a video recorder for recording output of the video camera.

29. A simulation system suitable for practising endovascular repair surgery involving insertion of a graft substantially as hereinbefore described with reference to and as illustrated in Figures 1 to 3 or Figure 4 of the accompanying drawings.
